# EUROPÄISCHE PATENTSCHRIFT

(11) **EP 1 018 287 B1**
(45) Veröffentlichungstag und Bekanntmachung des Hinweises auf die Patenterteilung: **30.01.2002**
(21) Anmeldenummer: 98954133.9
(22) Anmeldetag: 07.09.1998
(51) Int. Cl.: H04Q 11/04, H04Q 3/62

(54) **KOMMUNIKATIONSSYSTEM**
COMMUNICATION SYSTEM
SYSTEME DE COMMUNICATION

(30) Priorität: 22.09.1997 DE 19741772
(43) Veröffentlichungstag der Anmeldung: 12.07.2000
(73) Patentinhaber: SIEMENS AKTIENGESELLSCHAFT, 80333 München (DE)
(72) Erfinder: BRIESKORN, Jürgen, D-82269 Geltendorf (DE)
(86) Internationale Anmeldenummer: DE9802634
(87) Internationale Veröffentlichungsnummer: WO9916176

(56) Entgegenhaltungen:
- WO-A-95/22183
- US-A- 4 748 656
- KIRNER S: "ISAR - LÄSST DATEN STATT WASSER FLIESSEN" ELEKTRONIK, Bd. 45, Nr. 20, 1. Oktober 1996, Seiten 56-60, XP000638769
- HOFER G: "THE IOM2 SERIAL BUS INTERFACE FOR THE INTERCONNECTION OF ISDN ICS" ELECTRONIC ENGINEERING, Bd. 62, Nr. 762, 1. Juni 1990, Seite 69/70, 72, 74, 76 XP000128922

## Beschreibung

Die vorliegende Erfindung betrifft ein Kommunikationssystem zum Anschließen zumindest eines Telekommunikationsendgeräts und zumindest einer Computereinrichtung an eine Vermittlungseinrichtung.

Analoge Telefonanlagen werden zunehmend durch digitale ersetzt, die vorwiegend auf dem ISDN - Standard (Integrated Services Digital Network) beruhen. ISDN ist durch mehrere internationale digitale Kommunikationsstandards definiert, die weltweit von Telefongesellschaften anerkannt werden. Die ISDN-Technologie wird benutzt, um sowohl Sprache als auch Daten, die Graphiken, Töne und Filme umfassen können, digital Signale über öffentliche Fernmeldenetze zu senden. Der ISDN-Standard umfaßt digitale Standardübertragungsprotokolle, Anschlüsse und Verbindungskabel. Dem Benutzer stehen zwei Arten von ISDN-Anschlüssen zur Verfügung. Der international Basisanschluß (S₀) umfaßt zwei B - Kanäle mit je 64 KBit/s und einen D - Kanal mit 16 KBit/s. Die B - Kanäle übertragen die Nutzinformation. Der D - Kanal wird für die Signalisierung verwendet. An einer S₀ - Schnittstelle können dann bis zu acht Telefone oder andere Endgeräte betrieben werden.

Neben dem Basisanschluß (S₀) steht der ebenfalls international genormte Primärmultiplexanschluß (S_{2M}) zur Verfügung, der 30 B - Kanäle und 1 D - Kanal mit 64 KBit/s umfaßt.

ISDN-Telefone können direkt an öffentlichen Netzen oder an privaten Nebenstellenanlagen (PABX, Private Automatic Brunch Exchange) betrieben werden. Öffentliche Kommunikationsnetze stellen in Deutschland üblicherweise zweidrähtige Uₖ₀-Schnittstellen zur Verfügung. Diese Uₖ₀ - Schnittstellen werden in einen sogenannten Netzabschluß (NT) in eine vierdrähtige S₀ - Schnittstelle umgesetzt. Zum normalen Betrieb benötigt der Netzabschluß Energie aus dem öffentlichen Stromnetz. Bei Stromausfall versorgt der Netzabschluß (NT) ein notspeiseberechtigtes Endgerät mit Energie aus dem öffentlichen Telefonnetz. Der Notbetrieb wird durch eine Umkehr der Versorgungsspannung an der S₀ - Schnittstelle angezeigt.

Endgeräte werden vorzugsweise über die Uₚ₀ - Schnittstelle an Nebenstellenanlagen angeschlossen. Die Uₚ₀ - Schnittstelle überträgt ebenfalls zwei B - Kanäle und einen D - Kanal. Die Uₚ₀ - Schnittstelle ist nicht international genormt. Deshalb existieren neben ihr viele andere herstellerspezifische U-Schnittstellen.

Da der ISDN - Standard ein digitaler Standard ist, können Computer besonders leicht über Einsteckkarten an ISDN-Schnittstellen angeschlossen werden. Im Gegensatz zur Sprachübertragung durch Telefone oder Bildübertragung durch Faxgeräte bieten Computer die Möglichkeit sehr unterschiedliche Datenformate zu übertragen. So werden im Bereich des Internets eine Vielzahl von Bildformaten, Sprachkompressions-verfahren bis hin zu Formaten zur Übertragung von bewegten Bildern verwendet. Es ist Stand der Technik, Faxe mit Computern zu verschicken und zu empfangen. Ein mit einem Drucker und einem Scanner verbundener Computer ersetzt mit der entsprechenden Software ein Faxgerät.

Ein Problem in der gegenwärtigen PC-Welt ist die mangelnde Flexibilität der verwendeten Schnittstellen. Ein PC ist standardmäßig mit einer Tastaturschnittstelle, einer parallelen und zwei seriellen Schnittstellen (RS - 232) ausgerüstet. Die Tastaturschnittstelle ist durch die Tastatur belegt. Eine serielle Schnittstelle wird der Maus zugeordnet und die parallele Schnittstelle ist für den Drucker reserviert. Für weitere Peripheriegeräte steht nur die zweite serielle Schnittstelle zur Verfügung. Die Datenübertragung über eine serielle Schnittstelle ist im PC-Bereich auf maximal 115,2 KBit/s begrenzt. Deshalb werden Peripheriegeräte, die große Datenmengen produzieren, wie z.B. Scanner, über zusätzliche Einsteckkarten direkt an computerinterne Busse wie den PCI - Bus oder den ISA - Bus angeschlossen. Dazu ist es allerdings erforderlich, den Computer zu öffnen und weitere Einsteckkarten zu installieren. Ein weiterer Nachteil der vielen verschiedenen Schnittstellen im PC - Bereich liegt in der Verwendung vieler unterschiedlicher Steckverbindungen. Zur Lösung dieses Problems sind im Stand der Technik verschiedene Bussysteme bekannt. Im Unterschied zu den PCI - (Peripheral Component Interconnect) und ISA - (Industry Standard Architecture)-Bussen kann eine SCSI ( Small Computersystems Interface)-Schnittstelle auch aus dem Computergehäuse herausgeführt werden und so zum Anschluß von bis zu sieben Peripheriegeräte mit hohen Datenübertragungsraten, wie z.B. Festplatten oder Scanner verwendet werden. Im Niedrigpreissegment stehen eine Vielzahl von Bussen, wie z.B. der Apple Desktop Bus (ADB), die RS - 485 - Schnittstelle, die eine Erweiterung der RS-232 - Schnittstelle darstellt, der Access.bus (A.b), das Connection Highway Interface (CHI), der GeoPort und neuerdings der Universal Seriell Bus (USB) zur Verfügung.

Ein wesentliches Ziel bei der Definition des USB - Standards war ein niedrigpreisliches Bussystem zum Anschluß von externen Peripheriegeräten an PCs zur Verfügung zu stellen. Der USB - Bus bietet geringe bis mittlere Datenübertragungsraten (bis zu 12 MBit/s). Damit ist der USB - Bus hervorragend geeignet um eine Vielzahl von Peripheriegeräten, wie z.B. Scanner, Personal Digital Assistant (PDA), Tastaturen und Mäuse anzuschließen. An den USB - Bus können bis zu 127 Geräte angeschlossen werden. Ferner unterstützt der PCI - Bus die Plug - and - Play - Funktionalität. Die Verbindungskabel sind abschirmte Vierdrahtleitungen. Dabei werden zwei Drähte zur Übertragung einer Versorgungsspannung von 5 Volt verwendet. Die beiden anderen Drähte sind verdrillt und dienen der Signalübertragung. Für Datenübertragungsraten von 1,5 MBit/s sind ungeschirmte, unverdrillte Kabel ausreichend. Die Stecker sind so ausgelegt, daß ein Endgerät maximal 5 Ampere in die Versorgungsleitung des USB - Busses einspeisen kann. Die Energieversorgung über den USB - Bus bietet die Möglichkeit, Peripheriegeräte ohne Netzteile zu produzieren und damit Kosten zu sparen.

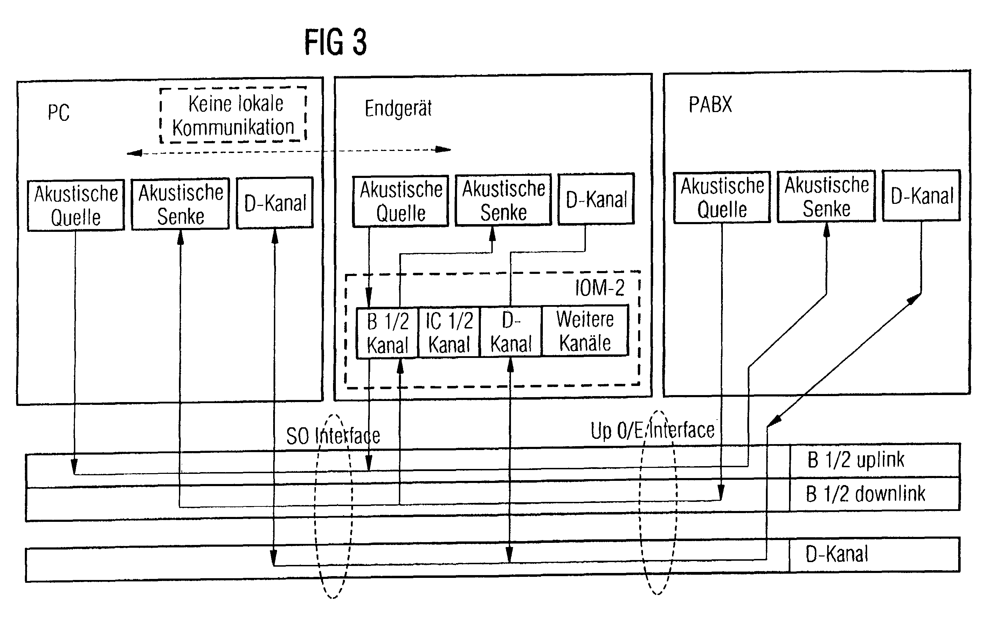

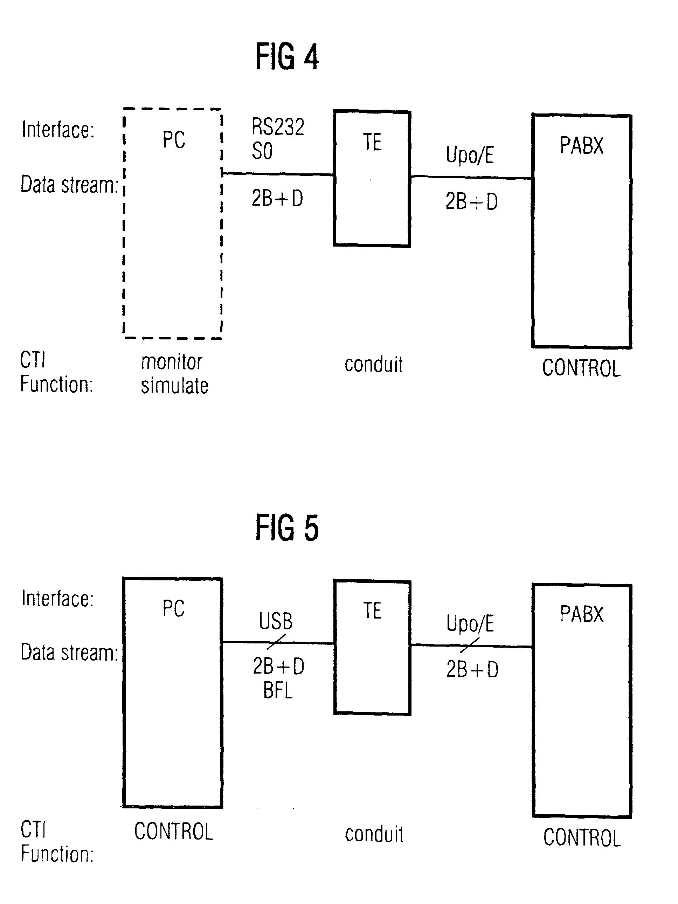

PCs und weitere Endgeräte, wie z.B. Telefone, können gemeinsam an öffentliche Fernsprechnetze oder auch an private Nebenstellenanlagen angeschlossen werden. Sofern das öffentliche Fernsprechnetz oder die private Nebenstellenanlage eine Schnittstelle, wie z.B. die S₀ - Schnittstelle oder die Uₚ₀-Schnittstelle zur Verfügung stellen, die den Anschluß mehrerer Endgeräte erlaubt, können PC und Endgerät an derselben Schnittstelle betrieben werden wie dies in Figur 3 angedeutet ist. Aus Kostengründen werden Telefone üblicherweise nur mit den nötigsten Funktionen ausgerüstet. Das Telefon bzw. Endgerät in Figur 3 kann deshalb nur Daten an die Nebenstellenanlage (PABX) senden und von der Nebenstellenanlage empfangen. Folglich ist in Figur 3 eine Kommunikation zwischen PC und Endgerät nur mittelbar über die Nebenstellenanlage (PABX) möglich. Es haben sich ferner herstellerspezifische Lösungen gemäß Figur 4 ausgebildet, wobei der PC beispielsweise über eine RS - 232 - Schnittstelle über ein Endgerät (TE) mit der Nebenstellenanlage (PABX) verbunden ist. Der Vorteil dieser Lösung besteht darin, daß auf PC - Seite auf eine bereits vorhandene Schnittstelle wie beispielsweise die RS - 232-Schnittstelle zurückgegriffen werden kann. Nachteilig ist, daß die genannten Schnittstelle nicht die für die vollständige Kontrolle durch den PC benötigte Bandbreite aufweist.

Figur 3 zeigt ferner den internen Aufbau eines Telefons. Ein Telefon besitzt im wesentlichen drei Benutzerschnittstellen, nämlich ein Mikrophon (akust. Quelle), einen Lautsprecher (akust. Senke) und eine Tastatur für den Wählvorgang (D-Kanal). Diese drei Benutzerschnittstellen eventuell ergänzt durch weitere Ein- und Ausgabeeinheiten sind über den telefoninternen IOM-2 - Bus (Input Output Multiplexer) mit der U_{p0/E} - Schnittstelle oder S₀ - Schnittstelle zur Nebenstellenanlage (PABX) oder dem öffentlichen Fernsprechnetz verbunden. Die IOM-2 - Schnittstelle weist eine Rahmenstruktur für drei IOM - Kanäle auf. Jeder dieser IOM-Kanäle stellt vier Unterkanäle mit je 64 KBit/s zur Verfügung. In der IOM - 2 - Rahmenstruktur sind unter anderen 2 B - Kanäle (64 KBit/s), ein D - Kanal (16 KBit/s), ein D*-Kanal (16 KBit/s), ein CTRL - Kanal (16 KBit/s) und 2 IC-Kanäle (64 KBit/s) angelegt. Die B - Kanäle dienen dem Datenaustausch mit der Vermittlungsstelle vorzugsweise von Sprachdaten. Der D - Kanal dient zum Austausch von Kontrollinformationen mit der Vermittlungsstelle. Die beiden IC - Kanäle dienen dem Datenaustausch, vorzugsweise von Sprachdaten, mit weiteren Endgeräten, beispielsweise Slavephones, der D* und CTRL - Kanal dem Austausch von Kontrollinformationen mit weiteren Endgeräten. Bei der Verbindung mit weiteren Telefon (Slavephones) muß das Telefon, das mit der Vermittlungsstelle verbunden ist, als Masterphone konfiguriert werden.

Aus US-A 4,748,656 ist eine Schnittstellenanordnung bekannt, die ein Kommunikationssystem mit einem Telekommunikationsendgerät verbindet. Diese Schnittstelle ist durch eine Einsteckkarte in einem Personalcomputer implementiert, welcher einerseits den Betrieb des angeschlossenen Telekommunikationsendgerätes steuert und andererseits Dienste des Kommunikationssystems bereitstellt. Die komplette Signalisierung aus dem Kommunikationssystem wird durch den Personalcomputer ausgewertet, in geeignete Steuersignale umgesetzt und an das Telekommunikationsendgerät weitergeleitet. Die vom Telekommunikationsendgerät empfangenen Daten werden im Personalcomputer ausgewertet und modifiziert. Hieraus werden geeignete Steuer- und Signalisierungsmeldungen abgeleitet, die dann vom Personalcomputer an das Kommunikationssystem weitergeleitet werden. Der Anschluß weiterer Peripheriegeräte an die Schnittstelle zwischen dem Personalcomputer und dem Telekommunikationsendgerät ist jedoch ebensowenig möglich, wie der Stand-alone-Betrieb des Telekommunikationsendgerätes bei ausgeschaltetem Personalcomputer.

In "Isar - läßt Daten statt Wasser fließen" ELEKTRONIK Bd. 45, Nr. 20, 01. Oktober 1996, Seite 56 bis 60 ist ein Halbleiter-Baustein sowohl für die digitale als auch für die analoge Datenübertragung beschrieben. Dieser Baustein dient dem Bau kostengünstiger passiver ISDN-PC-Karten, die parallel zum Datentransfer mit ISDN-Teilnehmern auch mit Teilnehmern im analogen Netz kommunizieren und Daten übertragen können. Die Funktionen von passiven ISDN-PC-Karten, die auf dem dort beschriebenen Halbleiterbaustein basieren, sind mit denen aktiver Karten vergleichbar. In einem Anwendungsbeispiel ist der Halbleiterbaustein über einen IOM-2-Bus mit einem ISDN-Transceiver und über einen lokalen Bus mit einer PC-Bus-Schnittstelle verbunden.

Es ist die Aufgabe der vorliegenden Erfindung eine Lösung anzugeben, durch die ein PC und ein Telefon verbunden werden können, wobei dies mit geringem Hard- und Softwareaufwand erreicht werden soll und wobei über die Schnittstelle zwischen PC und Telefon weitere Peripheriegeräte anschließbar sein sollen.

Diese Aufgabe wird gelöst durch ein Kommunikationssystem mit mindestens einer Computereinrichtung, mindestens einem Telekommunikationsendgerät und einer Vermittlungseinrichtung, die an ein öffentliches Fernmeldenetz anschließbar ist, wobei die Computereinrichtung und das Telekommunikationsendgerät über ein erstes Bussystem verbunden sind,
das Telekommunikationsendgerät über eine Schnittstelle an die Vermittlungseinrichtung angeschlossen ist,
das Telekommunikationsendgerät über einen ersten Betriebsmodus verfügt, in dem die von der Vermittlungseinrichtung empfangenen Empfangsdaten von dem Telekommunikationsendgerät auf das erste Bussystem umgesetzt und über das erste Bussystem an die Computereinrichtung weitergeleitet werden, die Computereinrichtung über Einrichtungen zum Verarbeiten der von dem Telekommunikationsendgerät empfangenen Daten und zum Weiterleiten dieser Daten über das erste Bussystem an das Telekommunikationsendgerät verfügt, wobei die Daten von dem Telekommunikationsendgerät ausgegeben werden,
dadurch ge-kennzeichnet daß das erste Bussystem eine größere Bandbreite aufweist als ein zweites Bussystem, das zur Verbindung einzelner interner Baugruppen des Telekommunikationsendgerätes verwendet wird, und daß in dem ersten Betriebsmodus ferner die von dem Telekommunikationsendgerät erzeuten Sendedaten über das erste Bussystem eine Computereinrichtung weitergeleitet werden, die Computereinrichtung die empfangenen Daten mittels der Verarbeitungseinrichtung verarbeitet und die verarbeiteten Sendedaten über das erste Bussystem an das Telekommunikationsendgerät zurückleitet und das Telekommunikationsendgerät diese Daten zur Weiterleitung an die Vermittlungseinrichtung auf die entsprechende Schnittstelle umsetzt.

Bevorzugte Ausgestaltungen der vorliegenden Erfindung sind Gegenstände der Unteransprüche.

Im folgenden wird eine bevorzugte Ausführungsform der vorliegenden Erfindung unter Bezugnahme auf die beiliegenden Zeichnungen näher erläutert. Dabei zeigen:
- Figur 1: eine erfindungsgemäße Kopplung zwischen PC und Endgerät über den USB - Bus, wobei der PC indirekt über USB und das PC-Endgerät über eine U_{p0/E} - Schnittstelle mit der Nebenstellenanlage (PABX) verbunden sind, wobei die Bandbreite der USB-Schnittstelle um mindestens die Kanäle 2 IC, D* und CTRL größer ist als die Bandbreite der Uₚₒ-Schnittstelle.
- Figur 2: ein Schichtenmodell für das Endgerät gemäß Figur 1, das sowohl im herkömmlichen Symphony - Mode (BRI) als auch im erfindungsgemäßen Butterfly - Mode (BFL) betrieben werden kann,
- Figur 3: den logischen Datenfluß bei herkömmlichem Anschluß eines PCs und eines Endgeräts über eine S₀ - Schnittstelle oder eine U_{p0/E} - Schnittstelle an eine Nebenstellenanlage (PABX) über 2 B - Kanäle und einen D-Kanal,
- Figur 4: eine herkömmliche Verkabelung bei Anschluß eines PCs über eine RS - 232 - oder S₀ - Schnittstelle über ein Endgerät (TE) an eine Nebenstellenanlage,
- Figur 5: eine erfindungsgemäß ausgestaltete Butterfly - Architektur, wobei PC und Endgerät (TE) über einen USB-Bus verbunden sind und Endgerät mit der Nebenstellenanlage (PABX) über eine U_{p0/E} - Schnittstelle verbunden sind,
- Figur 6: eine schematische Darstellung einer Datenübertragung in einer erfindungsgemäßen Butterfly - Architektur im Symphony - Mode, wobei das Endgerät in herkömmlicher Weise von der Nebenstellenanlage gesteuert wird und keine Daten direkt zwischen PC und Endgerät (TE) übertragen werden, und
- Figur 7: eine schematische Darstellung einer Butterfly - Architektur im erfindungsgemäßen Butterfly - Mode, wobei das Endgerät (TE) vom PC gesteuert wird, wobei ferner das Endgerät die Daten zwischen der Nebenstellenanlage und PC nur weiterreicht und wobei, falls erforderlich, der PC wieder Daten über den USB - Bus an das Endgerät beispielsweise zur Lautsprecherausgabe weiterleitet.

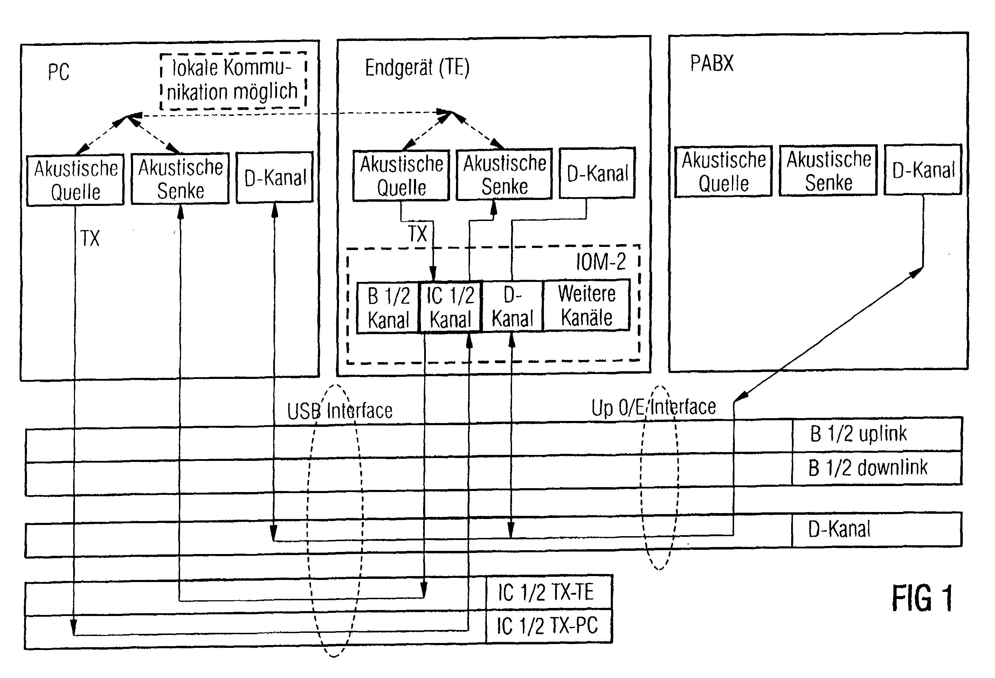

Gemäß einer bevorzugte Ausführungsform der vorliegenden Erfindung die in Figur 1 gezeigt ist, ist das Endgerät (TE), das vorzugsweise ein Telefon darstellt, physikalisch über eine U_{p0/E} - Schnittstelle mit einer Nebenstellenanlage (PABX) verbunden. Gemäß einer anderen Ausführungsform kann das Endgerät über eine andere Schnittstelle, beispielsweise eine S₀- oderUₖ₀ - Schnittstelle mit einem öffentlichen Fernsprechnetz verbunden sein. PC und Endgerät sind physikalisch vorzugsweise über einen USB - Bus verbunden. In Figur 5 ist die Verkabelung zwischen PC, Endgerät (TE) und Nebenstellenanlage dargestellt, die für den Informationsaustausch gemäß Figur 1 erforderlich ist.

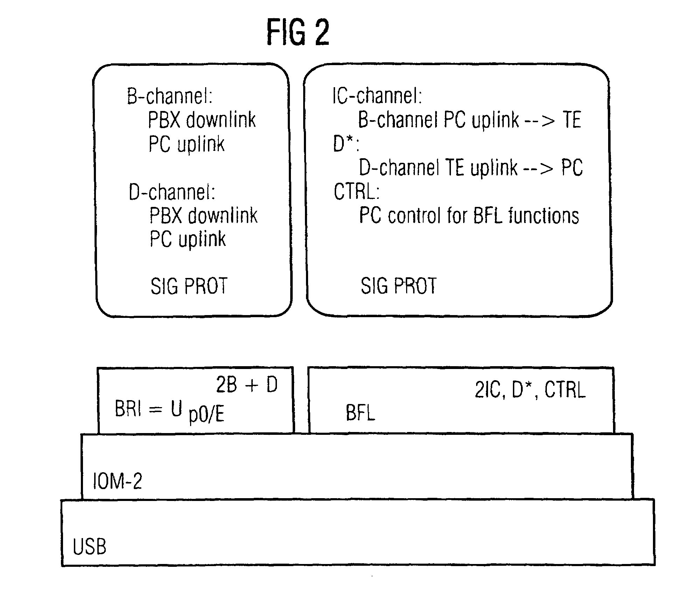

Im Prinzip kommen für die physikalische Verbindung zwischen PC und Endgerät in Figur 1 alle bekannten Busse in Frage, die eine Bandbreite von (4x64 KBit/s + 16 KBit/s) (4 B - Kanäle und 1 D - Kanal) übertragen können. Allerdings fällt der Hardwareaufwand im Endgerät dann besonders gering aus, wenn die physikalische Schnittstelle zwischen PC und Endgerät die gesamte Bandbreite des IOM-2 - Busses, also die gesamte IOM-2 - Rahmenstruktur aufnehmen kann (Figur 2). Wie oben bereits erwähnt beträgt die Bandbreite des IOM-2 - Busses 12x64 KBit/s. Sie entspricht also 12 B - Kanälen oder insgesamt 768 KBit/s. Diese Bedingung erfüllen insbesondere die seriellen Schnittstellen (RS-232) und die S₀ - Schnittstelle (Figur 4) nicht. Die erforderliche Bandbreite wird aber beispielsweise vom USB - Bus zur Verfügung gestellt.

Da der USB - Bus also in der Lage ist die gesamte IOM-2-Rahmenstruktur zu übertragen, müssen die beiden IC - Kanäle, die beiden B - Kanäle zur Nebenstellenanlage und der D - Kanal nicht erst aufwendig aus der IOM-2 - Rahmenstruktur herausgefiltert werden. Dadurch, daß die gesamte IOM-2 - Rahmenstruktur an den PC übertragen wird, kann der PC das Endgerät vollständig kontrollieren. Dadurch werden ferner die Daten, die die Nebenstellenanlage an das Endgerät schickt (Downlink) in einfacher Weise an den PC weitergereicht. Ferner kann der PC durch Einfügen von Daten in die IOM-2 - Rahmenstruktur in einfacher Weise Daten mittelbar an die Nebenstellenanlage senden. Für die direkte Kommunikation zwischen PC und Endgerät stehen zwei IC - Kanäle in jeder Richtung (Uplink und Downlink) zur Verfügung.

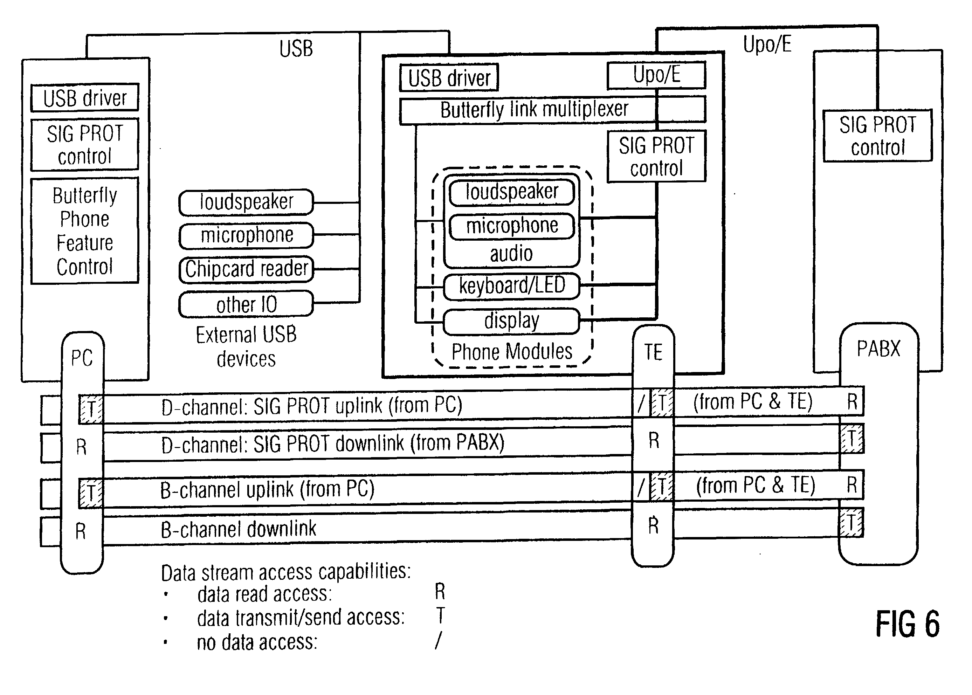

Die IOM-2 - Rahmenstruktur belegt nicht die vollständige Bandbreite des USB - Busses. Deshalb können wie in Figur 6 dargestellt über den USB - Bus weitere Peripheriegeräte an den PC angeschlossen werden. Hierfür kommen beispielsweise Lautsprecher, weitere Mikrophone, Chipkartenleser, Kurzwahlspeicher, Tastaturen, Mäuse und Kameras für die Bildtelefonie in Frage.

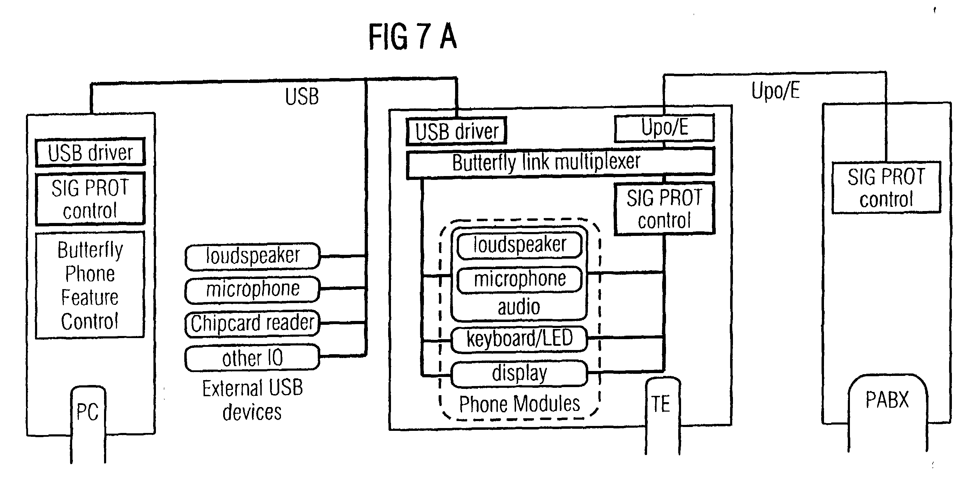

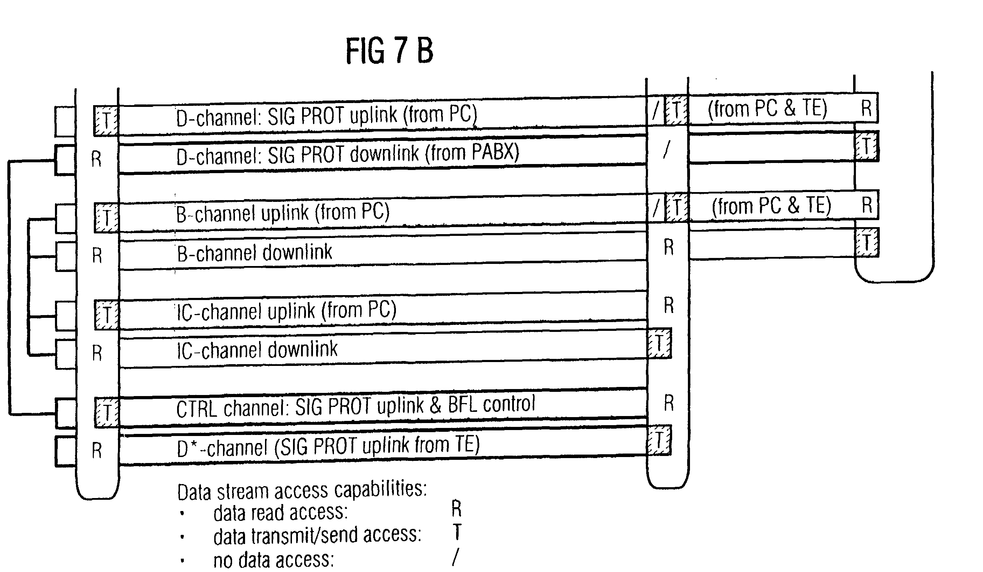

In Figur 2 ist die Verschachtelung der jeweiligen Schicht 1 Bitrahmenstrukturen im Endgerät dargestellt. Die unterste Schicht stellt der USB - Bus dar. Über der USB - Schicht liegt die IOM-2 - Schicht. Die IOM-2 - Schicht entspricht der Schicht 1 des OSI - Schichtenmodells in Richtung Endgerät. In Richtung PC wird die Schicht 1 des OSI-Modells durch den USB-Bus dargestellt. Die Schicht 1 Umsetzung IOM/USB erfolgt in einem hier nicht gezeigten Schicht 1 Konverter (z.B. Einsteckadapter in Telefon). In Figur 2 nicht eingezeichnet ist die LAP - Schicht, die der Schicht 2 des OSI - Schichtenmodells entspricht. Schicht 3 des OSI - Schichtenmodells wird als Signalisierungsprotokoll SIG PROT bezeichnet. Das Signalisierungsprotokoll SIG PROT kann sich in zwei Betriebszuständen befinden. Ein Betriebszustand ist der Symphony-Mode. Im Symphony - Mode (siehe Figur 4 sowie Figur 6) wird das Endgerät von der Nebenstellenanlage PABX gesteuert. Der zweite Betriebszustand ist der Butterfly - Mode (BFL) (siehe Figur 5 sowie Figur 7). Im Butterfly - Mode leitet das Endgerät Daten nur zwischen PC und Nebenstellenanlage weiter ohne auf diese zu reagieren. Daten (Sprache) zwischen PC und Endgerät werden über die beiden IC - Kanäle ausgetauscht. Befehle erhält das Endgerät vom PC über den Kontroll - Kanal (CTRL) (siehe auch Figur 7). Steuerbefehle, wie Tastatureingaben, kann das Telefon über den D* - Kanal an den PC senden.

In Figur 6 ist der logische Informationsfluß im Symphony-Mode dargestellt. Das Endgerät kommuniziert mit der Nebenstellenanlage über die U_{p0/E} - Schnittstelle. Die fett gezeichnete Verbindung zur Nebenstellenanlage weist darauf hin, daß die Nebenstellenanlage das Endgerät kontrolliert. Der PC kann einerseits mit Peripheriegeräten über den USB - Bus und mit der Nebenstellenanlage über den USB - Bus und das Endgerät kommunizieren. Der Symphony - Mode ermöglicht das Telefonieren auch bei ausgeschaltetem PC. Im Symphony - Mode wird das Endgerät durch die Nebenstellenanlage gesteuert.

In Figur 7 ist die Kommunikation im Butterfly - Mode dargestellt. Das Endgerät (TE) wird vom PC aus über den USB - Bus gesteuert. Dies ist durch die fett eingezeichneten USB - Leitungen dargestellt. Daten werden nur zwischen PC und Nebenstellenanlage (PABX) ausgetauscht. Diese Daten werden durch das Endgerät nur durchgeleitet und zwischen der U_{p0/E}-Schnittstelle und dem USB - Bus umgesetzt. Der PC steuert das Endgerät über den Kontroll - Kanal (CTRL). Tastatureingaben auf dem Telefon werden über den D* - Kanal zum PC übermittelt. Daten (Sprache) können Endgerät und PC über die IC-Kanäle austauschen.

Die Butterfly - Architektur ermöglicht die Vorverarbeitung von Daten aus der Nebenstellenanlage im PC und die anschließende Ausgabe auf dem Telefon. Umgekehrt kann beispielsweise Spracheingabe über das Telefon im PC vor der Weitergabe an die Nebenstellenanlage vorverarbeitet werden. Beispielsweise kann der PC Sprachverschlüsselung durchführen. Dabei würde er die vom Telefon kommenden Sprachdaten verschlüsselt an die Nebenstellenanlage weitergeben. Verschlüsselte Sprachsignale von der Nebenstellenanlage werden im Klartext an das Endgerät weitergegeben. Da jeweils nur ein B - Kanal zur Nebenstellenanlage und ein IC - Kanal zum Endgerät belegt werden, ist der Parallelbetrieb einer weiteren B - Kanalapplikation im PC möglich.

Die Butterfly - Architektur eignet sich ferner dafür, auf dem PC einen Anrufbeantworter zu implementieren. Der PC zeichnet sich durch hohe Rechenleistung und hohe Speicherkapazität auf der Festplatte aus. Zur Implementierung einer Anrufbeantworterfunktion in die Butterfly - Architektur ist es deshalb ausreichend, die Software auf dem PC zu erweitern. Die Sprach - Ein- und -Ausgabe erfolgt vorzugsweise wieder über das Telefon. Alternativ dazu können weitere Peripheriegeräte beispielsweise an den PC angeschlossen werden.

Ein weiteres bevorzugtes Anwendungsfeld der Computer - Telefon - Integration mittels Butterfly - Architektur ist die Bildtelefonie. Mit dem Standard H.320 steht ein Standard für die schmalbandige Bildübertragung zur Verfügung. Da im PC schon ein Bildschirm zur Verfügung steht ist lediglich eine Kamera zur Bildaufnahme erforderlich. Diese Kamera kann beispielsweise an den USB - Bus angeschlossen werden. Gemäß dem H.320 - Standard wird ein B - Kanal der U_{p0/E} - Schnittstelle für die Videoübertragung verwendet. Der zweite B - Kanal steht zur Sprachübertragung (gemultiplext mit Bilddaten) zur Verfügung. Sprachdaten werden über das Telefon ein- und ausgegeben. Gemäß der Butterfly - Architektur werden Sprachdaten zunächst zwischen PC und Telefon über einen IC - Kanal ausgetauscht. Der PC sendet die Sprachdaten über einen B - Kanal an die Nebenstellenanlage. Dabei werden die Sprachdaten durch das Telefon durchgeleitet. Dieses scheinbar komplizierte Verfahren ermöglicht es den Hardwareaufwand insbesondere im Telefon so gering wie möglich zu halten und die Telefonsoftware weitestgehend zu standardisieren.

## Patentansprüche

1. Kommunikationssystem mit mindestens einer Computereinrichtung (PC), mindestens einem Telekommunikationsendgerät (TE) und einer Vermittlungseinrichtung (PABX), die an ein öffentliches Fernmeldenetz anschließbar ist, wobei
die Computereinrichtung (PC) und das Telekommunikationsendgerät (TE) über ein erstes Bussystem (USB) verbunden sind,
das Telekommunikationsendgerät (TE) über eine Schnittstelle (U_{p0/E}) an die Vermittlungseinrichtung (PABX) angeschlossen ist,
das Telekommunikationsendgerät über einen ersten Betriebsmodus verfügt, in dem die von der Vermittlungseinrichtung empfangenen Empfangsdaten von dem Telekommunikationsendgerät auf das erste Bussystem (USB) umgesetzt und über das erste Bussystem an die Computereinrichtung (PC) weitergeleitet werden,
die Computereinrichtung (PC) über Einrichtungen zum Verarbeiten der von dem Telekommunikationsendgerät empfangenen Daten und zum Weiterleiten dieser Daten über das erste Bussystem an das Telekommunikationsendgerät verfügt, wobei die Daten von dem Telekommunikationsendgerät ausgegeben werden,
**dadurch gekennzeichnet, daß**
das erste Bussystem (USB) eine größere Bandbreite aufweist als ein zweites Bussystem (IOM-2), das zur Verbindung einzelner interner Baugruppen des Telekommunikationsendgerätes verwendet wird, und daß in dem ersten Betriebsmodus ferner die von dem Telekommunikationsendgerät erzeuten Sendedaten über das erste Bussystem (USB) eine Computereinrichtung (PC) weitergeleitet werden, die Computereinrichtung die empfangenen Daten mittels der Verarbeitungseinrichtung verarbeitet und die verarbeiteten Sendedaten über das erste Bussystem an das Telekommunikationsendgerät zurückleitet und das Telekommunikationsendgerät diese Daten zur Weiterleitung an die Vermittlungseinrichtung auf die entsprechende Schnittstelle umsetzt.

2. Kommunikationssystem nach Anspruch 1,
**dadurch gekennzeichnet,**
**daß** die Verarbeitungseinrichtung der Computereinrichtung die von dem Telekommunikationsendgerät erzeugten Sendedaten codiert und die von der Vermittlungseinrichtung empfangenen Empfangsdaten dekodiert.

3. Kommunikationssystem nach Anspruch 1 oder 2,
**dadurch gekennzeichnet,**
**daß** das erste Bussystem durch einen USB - Bus und das zweite Bussystem im wesentlichen durch einen IOM - 2 - Multiplexer realisiert wird und alle Daten des IOM - 2 - Multiplexers über das erste Bussystem übertragen werden.

4. Kommunikationssystem nach Anspruch 3,
**dadurch gekennzeichnet,**
**daß** die Computereinrichtung (PC) das Telekommunikationsendgerät in dem ersten Betriebsmodus gemäß dem über einen CTRL-Kanal des IOM - 2 - Multiplexers steuert, die Computereinrichtung über einen D* - Kanal des IOM - 2 - Multiplexers Kontrollinformationen vom Telekommunikationsendgerät erhält, wie beispielsweise die während des Drücken bestimmter Tasten des Telekommunikationsendgeräts erzeugten Informationen, und die Computereinrichtung (PC) und das Telekommunikationsendgerät (TE) über IC-Kanäle des IOM - 2 - Multiplexers Daten austauschen.

5. Kommunikationssystem nach Anspruch 3 oder 4,
**dadurch gekennzeichnet,**
**daß** das Telekommunikationsendgerät die Daten nur zwischen der Schnittstelle (U_{po/E}) und B - Kanälen des IOM - Multiplexers umsetzt.

6. Kommunikationssystem nach einem der Ansprüche 1 bis 5,
**dadurch gekennzeichnet,**
**daß** die Vermittlungseinrichtung (PABX) eine Nebenstellenanlage ist.

7. Kommunikationssystem nach Anspruch 6,
**dadurch gekennzeichnet,**
**daß** die Schnittstelle (U_{p0/E}) eine U_{p0/E} - Schnittstelle ist.

8. Kommunikationssystem nach einem der Ansprüche 1 bis 7,
**dadurch gekennzeichnet,**
**daß** das Telekommunikationsendgerät über einen zweiten Betriebsmodus verfügt, in es in herkömmlicher Weise von der Nebenstellenanlage gesteuert wird, wobei in diesem Betriebsmodus ein von der Computereinrichtung (PC) unabhängiger Betrieb möglich ist.

9. Kommunikationssystem nach einem der Ansprüche 1 bis 8,
**dadurch gekennzeichnet,**
**daß** das Telekommunikationsendgerät (TE) ein Telefon ist.

10. Kommunikationssystem nach einem der Ansprüche 3 bis 9,
**dadurch gekennzeichnet,**
**daß** die Computereinrichtung (PC) über ein Programm verfügt, durch das eine Anrufbeantwortersimulation ermöglicht wird,
wobei die entsprechenden Sendedaten Ansagetexte darstellen, und die Computereinrichtung über Einrichtungen zum Speichern dieser Sendedaten verfügt um die Ansagetexte zeitversetzt und wiederholt über das Telekommunikationsendgerät an die Vermittlungseinrichtung weiterleiten zu können
und wobei die Empfangsdaten, die Nachrichten von Anrufern darstellen, von der Vermittlungseinrichtung (PABX) über das Telekommunikationsendgerät (TE) an die Computereinrichtung gesendet werden, in der Computereinrichtung zwischengespeichert werden und zeitversetzt als Empfangsdaten über das Telekommunikationsendgerät wiedergegeben werden.

11. Kommunikationssystem nach einem der Ansprüche 1 bis 10,
**dadurch gekennzeichnet,**
**daß** die Computereinrichtung (PC) über Einrichtungen zur Durchführung von Videokonferenzen verfügt oder mit entsprechenden Peripheriegeräten verbunden ist,
wobei die Computereinrichtung die Empfangsdaten von der Vermittlungseinrichtung über das Telekommunikationsendgerät erhält und nach Bilddaten und Sprachdaten aufteilt, die Bilddaten auf einem Bildschirm der Computereinrichtung anzeigt und die Sprachdaten wieder zu dem Telekommunikationsendgerät zurücksendet, und
die Computereinrichtung Sendedaten aus Sprachdaten und Bilddaten zusammensetzt, wobei die Sprachdaten aus einem Mikrophon des Telekommunikationsendgeräts über das erste Bussystem an die Computereinrichtung übertragen werden und die Sendedaten über das Telekommunikationsendgerät an die Vermittlungseinrichtung gesendet werden.

12. Kommunikationssystem nach einem der Ansprüche 1 bis 11,
**dadurch gekennzeichnet,**
**daß** das die Vermittlungseinrichtung (PABX) dem ISDN - Standard entspricht.

## Claims

1. Communication system comprising at least one computer device (PC), at least one telecommunication terminal (TE) and a switching device (PABX) which can be connected to a public telecommunication network, the computer device (PC) and the telecommunication terminal (TE) being connected via a first bus system (USB), the telecommunication terminal (TE) being connected to the switching device (PABX) via an interface (U_{p0/E}), the telecommunication terminal having a first operating mode in which the received data received from the switching device are moved from the telecommunication terminal onto the first bus system (USB) and forwarded to the computer device (PC) via the first bus system, the computer device (PC) having devices for processing the data received from the telecommunication terminal and for forwarding these data to the telecommunication terminal via the first bus system, the data being output by the telecommunication terminal, **characterized in that** the first bus system (USB) has a greater bandwidth than a second bus system (IOM-2) which is used for connecting individual internal modules of the telecommunication terminal, and **in that**, in the first operating mode, the transmit data generated by the telecommunication terminal are also forwarded to a computer device (PC) via the first bus system (USB), the computer device processes the received data by means of the processing device and conducts the processed transmit data back to the telecommunication terminal via the first bus system, and the telecommunication terminal moves these data to the corresponding interface for forwarding to the switching device.

2. Communication system according to Claim 1,
**characterized in that** the processing device of the computer device codes the transmit data generated by the telecommunication terminal and decodes the received data received from the switching device.

3. Communication system according to Claim 1 or 2,
**characterized in that** the first bus system is implemented by a USB bus and the second bus system is essentially implemented by an IOM-2 multiplexer and all data of the IOM-2 multiplexer are transmitted via the first bus system.

4. Communication system according to Claim 3,
**characterized in that** the computer device (PC) controls the telecommunication terminal in the first operating mode via a CTRL channel of the IOM-2 multiplexer, the computer device receives control information from the telecommunication terminal via a D* channel of the IOM-2 multiplexer, such as the information generated during the pressing of certain keys of the telecommunication terminal, and the computer device (PC) and the telecommunication terminal (TE) exchange data via IC channels of the IOM-2 multiplexer.

5. Communication system according to Claim 3 or 4,
**characterized in that** the telecommunication terminal moves the data only between the interface (U_{p0/E}) and B channels of the IOM multiplexer.

6. Communication system according to one of Claims 1 to 5, **characterized in that** the switching device (PABX) is a private branch exchange.

7. Communication system according to Claim 6,
**characterized in that** the interface (U_{p0/E}) is a U_{p0/E} interface.

8. Communication system according to one of Claims 1 to 7, **characterized in that** the telecommunication terminal has a second operating mode in which it is conventionally controlled by the private branch exchange, an operation independent of the computer device (PC) being possible in this operating mode.

9. Communication system according to one of Claims 1 to 8, **characterized in that** the telecommunication terminal (TE) is a telephone.

10. Communication system according to one of Claims 3 to 9, **characterized in that** the computer device (PC) has a program by means of which an answering machine simulation is made possible, the corresponding transmit data representing announcement texts and the computer device having devices for storing these transmit data in order to be able to forward the announcement texts with a time offset and repeatedly via the telecommunication terminal to the switching device, and the received data which represent messages from callers being sent to the computer device from the switching device (PABX) via the telecommunication terminal (TE), being temporarily stored in the computer device and reproduced with a time offset as received data via the telecommunication terminal.

11. Communication system according to one of Claims 1 to 10, **characterized in that** the computer device (PC) has devices for performing video conferences or is connected to corresponding peripheral devices, the computer device receiving the received data from the switching device via the telecommunication terminal and dividing them in accordance with video data and voice data, displaying the video data on a screen of the computer device and sending the voice data back to the telecommunication terminal, and the computer device assembling transmit data or voice data and video data, the voice data being transmitted to the computer device from a microphone of the telecommunication terminal via the first bus system and the transmit data being sent to the switching device via the telecommunication terminal.

12. Communication system according to one of Claims 1 to 11, **characterized in that** the switching device (PABX) corresponds to the ISDN standard.

## Revendications

1. Système de communication comportant au moins un système informatique (PC), au moins un terminal de télécommunication (TE) et un autocommutateur (PABX), qui peut être connecté à un réseau téléphonique public, le système informatique (PC) et le terminal de télécommunication (TE) étant reliés via un premier système de bus (USB), le terminal de télécommunication (TE) étant connecté à l'autocommutateur (PABX) via une interface U_{PO/E}, le terminal de télécommunication disposant d'un premier mode de service, dans lequel les données reçues par l'autocommutateur sont converties par le terminal de télécommunication sur le premier système de bus (USB) est retransmise au système informatique (PC) via le premier système de bus, le système informatique (PC) disposant d'un dispositif de traitement des données reçues par le terminal de télécommunication et de retransmission de ces données au terminal de télécommunication via le premier système de bus, les données du terminal de télécommunication étant sorties, **caractérisé en ce que**, le premier système de bus (USB) présente une largeur de bande supérieure à celle d'un second système de bus (IOM-2) utilisé pour connecter des modules internes individuels du terminal de télécommunication et **en ce que** dans le premier mode de service les données de transmission générées par le terminal de télécommunication sont d'autre part retransmises à un système informatique (PC) via le premier système de bus (USB), le système informatique traite les données reçues au moyen du dispositif de traitement et les données de transmission traitées sont retransmises au terminal de telécommunication via le premier système de bus et **en ce que** le terminal de télécommunication convertit ces données pour leur retransmission à l'autocommutateur sur l'interface correspondante.

2. Système de communication selon la revendication 1, **caractérisé en ce que** le dispositif de traitement du système informatique code les données de transmission générées par le terminal de télécommunication et décode les données reçues par l'autocommutateur.

3. Système de communication selon la revendication 1 ou 2, **caractérisé en ce que** le premier système de bus est réalisé par un bus USB et le second système de bus principalement par un multiplexeur IOM-2 et **en ce que** toutes les données du multiplexeur IOM-2 sont transmises via le premier système de bus.

4. Système de communication selon la revendication 3, **caractérisé en ce que** le système informatique (PC) commande le terminal de télécommunication dans le premier mode de service conformément au multiplexeur IOM-2 via un canal CTRL, le système informatique reçoit des informations de contrôle du terminal de télécommunication via un canal D* du multiplexeur IOM-2, comme par ex. les informations générées pendant la pression exercée sur certaines touches du terminal de télécommunication, et le système informatique (PC) et le terminal de télécommunication (TE) échangent des données via les canaux IC du multiplexeur IOM-2.

5. Système de communication selon la revendication 3 ou 4, **caractérisé en ce que** le terminal de télécommunication convertit les données seulement entre l'interface (U_{PO/E}) et les canaux B du multiplexeur IOM.

6. Système de communication selon l'une des revendications 1 à 5, **caractérisé en ce que** l'autocommutateur (PABX) est une installation téléphonique d'abonné.

7. Système de communication selon la revendication 6, **caractérisé en ce que** l'interface (U_{PO/E}) est une interface U_{PO/E}.

8. Système de communication selon l'une des revendications 1 à 7, **caractérisé en ce que** le terminal de télécommunication dispose d'un second mode de service, dans lequel il est commandé de manière traditionnelle par l'installation téléphonique d'abonné, un fonctionnement indépendant du système informatique (PC) étant possible dans ce mode de service.

9. Système de communication selon l'une des revendications 1 à 8, **caractérisé en ce que** le terminal de télécommunication (TE) est un téléphone.

10. Système de communication selon l'une des revendications 3 à 9, **caractérisé en ce que** le système informatique (PC) dispose d'un programme qui permet de simuler un répondeur automatique, les données de transmission correspondantes constituant des textes d'annonce, et **en ce que** le système informatique dispose de systèmes de mémorisation de ces données de transmission, afin de pouvoir retransmettre les textes d'annonce en différé et de manière répétée à l'autocommutateur via le terminal de télécommunication et **en ce que** les données reçues, qui constituent des messages d'appelants, sont émises de l'autocommutateur (PABX) au système informatique via le terminal de télécommunication (TE), font l'objet d'un stockage intermédiaire dans le système informatique et sont retransmises en différé comme données reçues via le terminal de télécommunication.

11. Système de communication selon l'une des revendications 1 à 10, **caractérisé en ce que** le système informatique (PC) dispose de dispositifs pour la réalisation de vidéoconférences ou est connecté à des périphériques correspondants, le système informatique recevant les données reçues de l'autocommutateur via le terminal de télécommunication et les divisant en données images et en données vocales, les données images étant affichées à l'écran du système informatique et les données vocales étant retransmises au terminal de télécommunication, et **en ce que** le système informatique assemble les données de transmission à partir de données vocales et de données image, les données vocales provenant d'un microphone du terminal de télécommunication étant retransmises au système informatique via le premier système de bus et les données de transmission étant envoyées à l'autocommutateur via le terminal de télécommunication.

12. Système de communication selon l'une des revendications 1 à 11, **caractérisé en ce que** l'autocommutateur (PABX) répond à la norme RNIS.
